# EUROPEAN PATENT SPECIFICATION

(11) **EP 3 130 959 B1**
(45) Date of publication and mention of the grant of the patent: **23.10.2019**
(21) Application number: 16156386.1
(22) Date of filing: 18.02.2016
(51) Int. Cl.: G02F 1/1333, G02F 1/1343, G06F 3/041, G06F 3/044

(54) **LIQUID CRYSTAL DISPLAY SCREEN AND MOBILE TERMINAL**
FLÜSSIGKRISTALLANZEIGESCHIRM UND MOBILES ENDGERÄT
ÉCRAN D'AFFICHAGE À CRISTAUX LIQUIDES ET TERMINAL MOBILE

(30) Priority: 12.08.2015 CN 201510493676
(43) Date of publication of application: 15.02.2017
(73) Proprietor: Xiaomi Inc., Beijing 100085 (CN)
(72) Inventor: LI, Guosheng, 100085 Haidian District Beijing (CN); LIU, Anyu, 100085 Haidian District Beijing (CN); YANG, Kun, 100085 Haidian District Beijing (CN)
(74) Representative: Sadler, Peter Frederick

(56) References cited:
- US-A1- 2004 150 629
- US-A1- 2014 247 239

## Description

### FIELD

The present disclosure generally relates to a technical field of display, and more particularly to a liquid crystal display screen and a mobile terminal.

### BACKGROUND

With development of liquid crystal display screen techniques, a liquid crystal display screen has more and more functions including sensing touch-control positions. In the liquid crystal display screen including a touch-control panel, a coordinate position whose capacitance varies can be determined by detecting a capacitance variance in the touch-control panel, and the touch-control position of a user on the liquid crystal display screen can be determined. Only a way to determine two-dimensional coordinates on the liquid crystal display screen is provided above, and pressure sensing in a third dimension is not provided.

US2004/0150629A1 discloses a general TFT-LCD (Thin-Film-Transistor Liquid-Crystal-Display) 1, which mainly includes two polarizers, two glass substrates, a color filter, a counter electrode panel, two orientation layers, a liquid crystal layer, a TFT array, and a back light source, wherein a pixel electrode and a TFT are formed in each pixel area of the TFT array, and the TFTs electrically connected to each other through a plurality of scan lines (or gate lines) and data lines (or drain lines).

US2014/0247239A1 discloses a layer stackup of a LCD panel, which includes a color filter layer and a TFT layer which can be located on opposing ends of the stackup. The TFT layer can have a TFT substrate layer disposed on top of it. The TFT substrate layer can include an interlayer dielectric (ILD) and other under layers, an organic planarization layer, Row Vcom, guard shield, and S-ITO. The color filter layer can have a color filter substrate layer disposed immediately below it. The color filter substrate layer can contain the color filter, black matrix, and overcoat. A sub-photo spacer can be disposed on the color filter substrate layer, and a floating ITO layer can be patterned on top of the sub-photo spacer. A fringing capacitance can be formed between the S-ITO and the floating ITO layer.

### SUMMARY

In view of issues in related arts, a liquid crystal display screen and a mobile terminal are provided in the present disclosure.

According to a first aspect of the present disclosure, a liquid crystal display screen is provided as defined in claim 1.

Optionally, the transparent electrode is consisted of a plurality of transparent electrodes arranged in parallel in a first direction and/or a second direction, the second direction being perpendicular to the first.

Optionally, there exists a predetermined distance between every two consecutive transparent electrodes arranged in parallel in the first direction.

Optionally, there exists a predetermined distance between every two consecutive transparent strip electrodes arranged in parallel in the second direction.

Optionally, the liquid crystal display screen further includes a backlight; and the backlight is positioned on a surface, which is not adjacent to the TFT array glass substrate, of the lower polarizer plate.

According to a second aspect of the present disclosure, a mobile terminal is provided, the mobile terminal comprising a processor and a liquid crystal display screen according to any previous aspect of the present disclosure, wherein; the processor is configured to detect a capacitance value between the plurality of supports and the transparent electrodes, and determine a pressure value applied on the liquid crystal display screen by an operator based on the detected capacitance value.

In the technical solutions provided by the present disclosure, by means of the transparent electrodes and the support array provided in the liquid crystal layer in the liquid crystal display screen, the pressure value on the liquid crystal display screen can be determined based on the capacitance value formed between the transparent electrodes and the support array, so pressure sensing in a third dimension, in addition to touch-control sensing, is implemented on the liquid crystal display screen. More functions can be implemented by using the detected pressure value, and human-computer interaction can be improved.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a diagram showing a liquid crystal display screen according to an exemplary embodiment.
Fig. 2 is a structure diagram showing a liquid crystal layer in the liquid crystal display screen according to an exemplary embodiment.
Fig. 3 is a structure diagram showing another liquid crystal layer in the liquid crystal display screen according to an exemplary embodiment.
Fig. 4 is a structure diagram showing the liquid crystal display screen in which a transparent electrode is consisted of a plurality of transparent electrodes arranged in parallel in a horizontal direction according to an exemplary embodiment.
Fig. 5 is a structure diagram showing the liquid crystal display screen in which the transparent electrode is consisted of a plurality of transparent electrodes arranged in parallel in a vertical direction according to an exemplary embodiment.
Fig. 6 is a structure diagram showing the liquid crystal display screen in which the transparent electrode is consisted of the plurality of transparent electrodes arranged in parallel in the horizontal direction and the plurality of transparent electrodes arranged in parallel in the vertical direction according to an exemplary embodiment.
Fig. 7 is a block diagram showing a mobile terminal according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

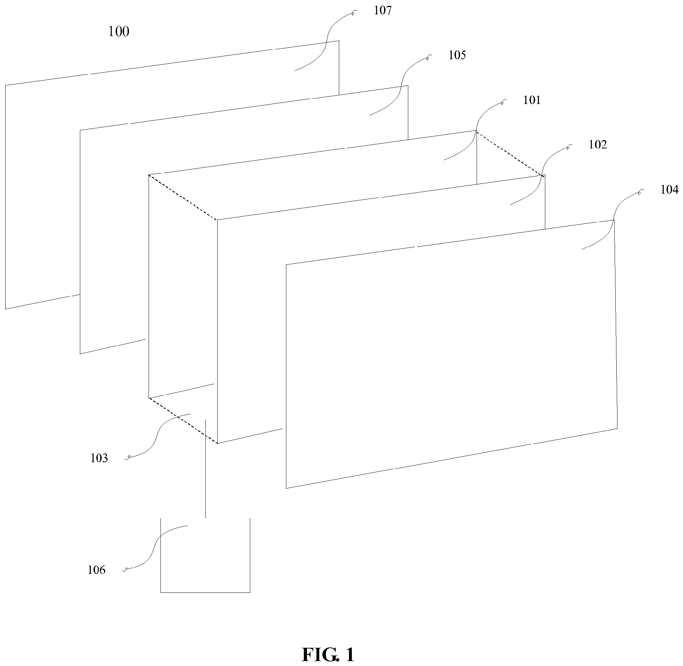

Fig. 1 is a diagram showing a liquid crystal display screen according to an exemplary embodiment. The liquid crystal display screen 100 includes a TFT (Thin Film Transistor) array glass substrate 101, a color filter plate 102, a liquid crystal layer 103 between the TFT array glass substrate 101 and the color filter plate 102, an upper polarizer plate 104 on a surface, which is not adjacent to the liquid crystal layer 103, of the color filter plate 102, and a lower polarizer plate 105 on a surface, which is not adjacent to the liquid crystal layer 103, of the TFT array glass substrate101.

The liquid crystal layer 103 further includes a support array 1031 and a transparent electrode 1032, wherein the support array 1031 and the transparent electrode 1032 are respectively positioned on surfaces, which are adjacent to the TFT array glass substrate 101 and the color filter plate 102, of the liquid crystal layer103. Liquid crystals are filled between the support array 1031 and the transparent electrode 1032.

In embodiments of the present disclosure, positions of the support array 1031 and the transparent electrode 1032 in the liquid crystal layer 103 may not be defined. The support array 1031 can be positioned on any side of the liquid crystal layer 103, i.e. between the liquid crystal layer 103 and the TFT array glass substrate 101 or between the liquid crystal layer 103 and the color filter plate 102. Correspondingly, the transparent electrode 1031 can be positioned on the other side of the liquid crystal layer 103, i.e. opposite to the support array 1031 between the liquid crystal layer 103 and the TFT array glass substrate 101 or between the liquid crystal layer 103 and the color filter plate 102.

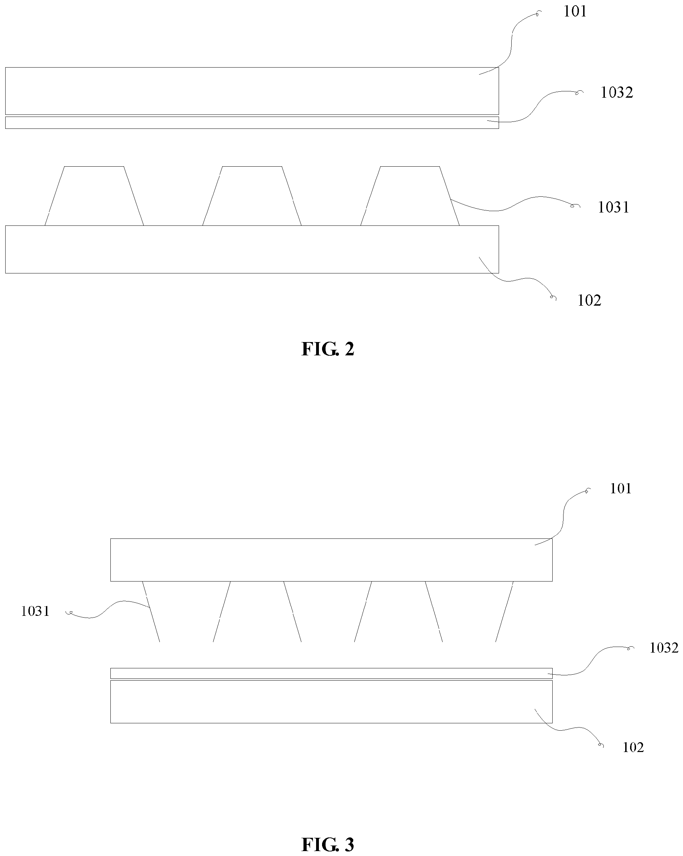

As shown in fig. 2, which shows a structure diagram of the liquid crystal layer 103, the support array 1031 and the transparent electrode 1032 can be positioned as follows: the support array 1031 is positioned on a surface, which is adjacent to the TFT array glass substrate 101, of the liquid crystal layer103; and the transparent electrode 1032 is positioned on a surface, which is adjacent to the color filter plate 102, of the liquid crystal layer 103.

Furthermore, as shown in fig. 3, which shows a structure diagram of the liquid crystal layer 103, the support array 1031 and the transparent electrode 1032 can also be positioned as follows: the support array 1031 is positioned on a surface, which is adjacent to the color filter plate 102, of the liquid crystal layer 103; and the transparent electrode 1032 is positioned on a surface, which is adjacent to the TFT array glass substrate 101, of the liquid crystal layer 103.

In embodiments of the present disclosure, the transparent electrode 1032 can be a whole transparent electrode, or can be consisted of a plurality of transparent electrodes.

In a first case, the transparent electrode 1032 is the whole transparent electrode.

The support array 1031 is not in direct contact with the transparent electrode 1032 in the liquid crystal layer 103, and a predetermined spatial distance exists between the support array 1031 and the transparent electrode 1032. The support array 1031 and the transparent electrode 1032 constitute a capacitor when they are electrified. As the distance between the support array 1031 and the transparent electrode 1032 is fixed when the liquid crystal display screen 100 is not pressed (an error of the distance can be ignored), a capacitance value of the capacitor constituted by the support array 1031 and the transparent electrode 1032 when they are electrified is relatively fixed. Therefore, the capacitance value of the capacitor constituted by the support array 1031 and the transparent electrode 1032 when the liquid crystal display screen 100 is not pressed can be detected in advance, and the capacitance value can be taken as a reference for determining whether the liquid crystal display screen 100 is pressed.

The capacitance value of the capacitor constituted by the support array 1031 and the transparent electrode 1032 can be detected by the following way: the transparent electrode 1032 is electrically connected with a control chip; the control chip issues a detecting instruction to the transparent electrode 1032 and a current voltage value is detected by the transparent electrode 1032; the capacitance value of the capacitor currently constituted by the support array 1031 and the transparent electrode 1032 is calculated by using a specified formula based on the detected voltage value.

The control chip can be a device in the liquid crystal display screen 100. Accordingly, the liquid crystal display screen 100 further includes the control chip 106, and the transparent electrode 1032 is electrically connected with the control chip 106. The control chip can be a Micro Controller Unit (MCU). The MCU further includes an A/D converter, so it can convert a voltage signal detected in the transparent electrode 1032 from an analog signal to a digital signal and then calculate the capacitance value.

Alternatively, the control chip can be a device, which is a separate device of a mobile terminal rather than belonging to the liquid crystal display screen 100.

In a second case, the transparent electrode 1032 is consisted of a plurality of transparent electrodes.

The arrangement of the transparent electrode 1032 is the following: the transparent electrode 1032 is consisted of a plurality of transparent electrodes arranged in parallel in a horizontal direction; the transparent electrode 1032 is consisted of a plurality of transparent electrodes arranged in parallel in a vertical direction; the transparent electrode 1032 is consisted of the plurality of transparent electrodes arranged in parallel in the horizontal direction and the plurality of transparent electrodes arranged in parallel in the vertical direction; a predetermined distance exists between every two consecutive transparent electrodes arranged in parallel in the horizontal direction; or the predetermined distance exists between every two consecutive transparent electrodes arranged in parallel in the vertical direction.

In the liquid crystal layer 103, the support array 1031 is not in direct contact with each transparent electrode in the transparent electrode 1032, and a predetermined spatial distance exists between the support array 1031 and each transparent electrode in the transparent electrode 1032. The support array 1031 and each transparent electrode in the transparent electrode 1032 constitute a capacitor when they are electrified, and the number of capacitors is the same as the number of the transparent electrodes in the transparent electrode 1032. As the distance between the support array 1031 and each transparent electrode in the transparent electrode 1032 is fixed (the error of the distance can be ignored) when the liquid crystal display screen 100 is not pressed, the capacitance value of each capacitor constituted by the support array 1031 and each transparent electrode in the transparent electrode 1032 when they are electrified are relatively fixed. Therefore, the capacitance value of the capacitor constituted by the support array 1031 and each transparent electrode in the transparent electrode 1032 when the liquid crystal display screen 100 is not pressed can be detected in advance, and the capacitance value of each transparent electrode can be taken as a reference for determining whether the liquid crystal display screen 100 is pressed. Generally, the distances between the support array 1031 and every transparent electrode in the transparent electrode 1032 are the same, so the capacitance values of the capacitors constituted by the support array 1031 and every transparent electrode in the transparent electrode 1032 when the liquid crystal display screen 100 is not pressed are the same, and the capacitance value of any transparent electrode can be calculated as the capacitance value when the liquid crystal display screen 100 is not pressed.

In the second case, it is necessary to provide the control chip, and every transparent electrode is electrically connected with the control chip. The control chip issues detecting instructions to every transparent electrode, and every transparent electrode detects a current voltage value. Capacitance values of the capacitors currently constituted by the support array 1031 and every transparent electrode in the transparent electrode 1032 are calculated by using the specified formula based on the detected voltage values.

Alternatively, the control chip can issue the detecting instructions to every transparent electrode by the following way: issuing the detecting instructions to the transparent electrodes line-by-line with a first period; issuing the detecting instructions to every transparent electrode at the same time with a second period. If the detecting instructions are issued at the same time, it is necessary to provide a plurality of A/D converters in the control chip to process data returned from every transparent electrode.

Alternatively, the control chip issues the detecting instructions to every transparent electrode when the liquid crystal display screen 100 is in a blanking interval, so that interference induced by the scanning of the liquid crystal display screen 100 can be avoided.

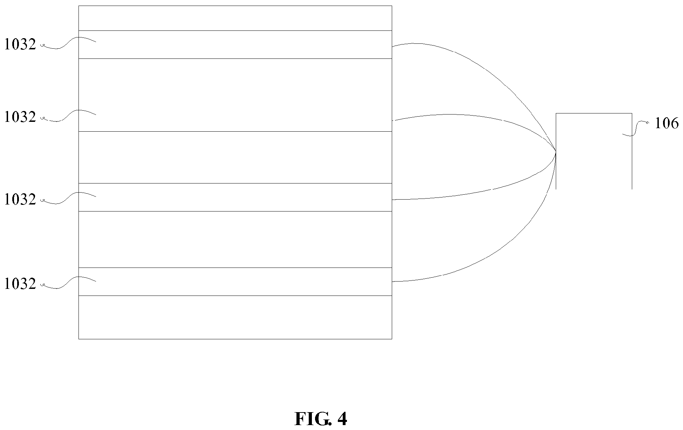

Fig. 4 is a structure diagram showing the liquid crystal display screen in which the transparent electrode 1032 is consisted of the plurality of transparent electrodes arranged in parallel in the horizontal direction.

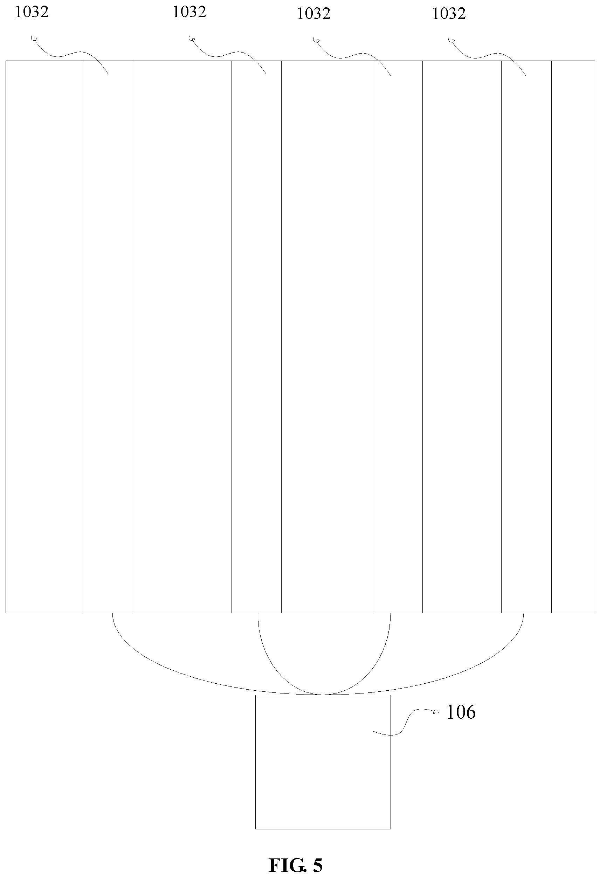

Fig. 5 is a structure diagram showing the liquid crystal display screen in which the transparent electrode 1032 is consisted of the plurality of transparent electrodes arranged in parallel in the vertical direction.

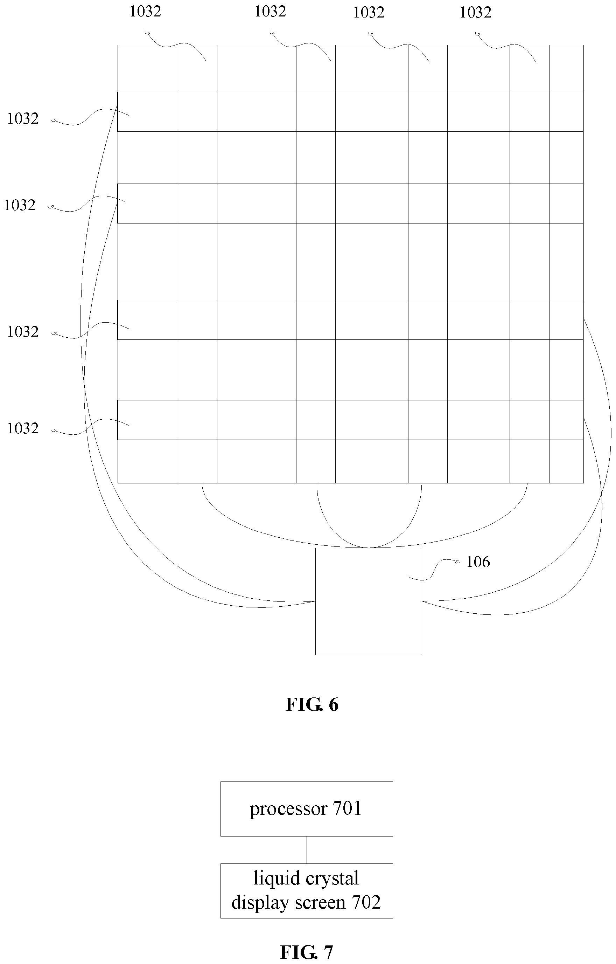

Fig. 6 is a structure diagram showing the liquid crystal display screen in which the transparent electrode 1032 is consisted of the plurality of transparent electrodes arranged in parallel in the horizontal direction and the plurality of transparent electrodes arranged in parallel in the vertical direction.

Furthermore, as supports in the support array 1032 are positioned under Black Matrix (BM) regions between sub-pixels and interval regions between the sub-pixels in the color filter plate 102, it is necessary to provide the transparent electrodes in positions in parallel with positions where the support array 1032 is provided.

Alternatively, when the transparent electrode 1032 is consisted of the plurality of transparent electrodes arranged in parallel in the horizontal direction and the plurality of transparent electrodes arranged in parallel in the vertical direction, line identifiers or volume identifiers corresponding to every transparent electrode can be set in advance, wherein lines and volumes can be correspondingly arranged based on the parallel arrangement in the horizontal direction or the parallel arrangement in the vertical direction of the transparent electrodes. Positions of every transparent electrode in the liquid crystal display screen 100 can be determined in advance based on the line identifiers or the volume identifiers.

The control chip can further determine the line identifiers or the volume identifiers corresponding to every transparent electrode when acquiring voltage values detected by every transparent electrode. Furthermore, if the detected capacitance value of the transparent electrode is different from the detected capacitance value when the liquid crystal display screen 100 is not pressed, then the pressed position on the liquid crystal display screen 100 can be determined based on the line identifier or the volume identifier of the transparent electrode.

In the embodiments of the present disclosure, after the capacitance value is detected by using the transparent electrode 1032, a pressure value applied on the liquid crystal display screen 100 by an operator can be determined based on predetermined corresponding relationships between capacitance values and pressure values.

In the embodiments of the present disclosure, after a plurality of capacitance values are detected by the plurality of transparent electrodes in the transparent electrode 1032, one of the plurality of capacitance values can be selected, for example, the largest capacitance value is selected, and the pressure value on the liquid crystal display screen 100 can be determined based on the predetermined corresponding relationships between the capacitance values and the pressure values. Alternatively, as the transparent electrodes in the liquid crystal display screen 100 are not evenly pressed when the user presses the liquid crystal display screen, a plurality of regions corresponding to positions that are determined to be pressed by the operator can be selected, one or more capacitance values can be selected from the regions so as to calculate pressure values in respective regions respectively, and then a plurality of pressure values in the regions corresponding to the pressed positions can be determined in the process of the liquid crystal display screen being pressed by the operator.

Alternatively, in the embodiments of the present disclosure, as shown in fig. 1, the liquid crystal display screen 100 further includes a backlight 107. The backlight 107 is positioned on a surface, which is not adjacent to the TFT array glass substrate 101, of the lower polarizer plate 105.

Alternatively, if the liquid crystal display screen 100 is a Liquid Crystal Display (LCD), the liquid crystal display screen 100 includes the backlight 107; if the liquid crystal display screen 100 is an Organic Light-Emitting Diode (OLED), the liquid crystal display screen 100 does not include the backlight 107.

In the embodiments of the present disclosure, by means of the transparent electrode and the support array provided in the liquid crystal layer in the liquid crystal display screen, pressure values on the liquid crystal display screen can be determined based on capacitance values formed between the transparent electrode and the support array, so pressure sensing in a third dimension, in addition to touch-control sensing, is implemented on the liquid crystal display screen. More functions can be implemented by using the detected pressure value, and human-computer interaction can be improved.

Fig. 7 is a block diagram showing a mobile terminal according to an exemplary embodiment. As shown in fig. 7, the mobile terminal includes a processor 701 and a liquid crystal display screen 702. The liquid crystal display screen 702 includes a Thin Film Transistor (TFT) array glass substrate, a color filter plate, a liquid crystal layer between the TFT array glass substrate and the color filter plate, an upper polarizer plate on a surface, which is not adjacent to the liquid crystal layer, of the color filter plate, and a lower polarizer plate on a surface, which is not adjacent to the liquid crystal layer, of the TFT array glass substrate. The liquid crystal layer further includes a support array and a transparent electrode, wherein the support array and the transparent electrode are respectively positioned on surfaces, which are adjacent to the TFT array glass substrate and the color filter plate, of the liquid crystal layer. Liquid crystals are filled between the support array and the transparent electrode. The processor 701 is configured to detect a capacitance value between the support array and the transparent electrode, and determine a pressure value applied on the liquid crystal display screen by an operator based on the detected capacitance value.

In the embodiments of the present disclosure, by means of the transparent electrode and the support array provided in the liquid crystal layer in the liquid crystal display screen, a pressure value on the liquid crystal display screen can be determined based on a capacitance value formed between the transparent electrode and the support array, so pressure sensing in a third dimension, in addition to touch-control sensing, is implemented on the liquid crystal display screen. More functions can be implemented by using the detected pressure value, and human-computer interaction can be improved.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A liquid crystal display screen (100), comprising a Thin Film Transistor (TFT) array glass substrate (101), a color filter plate (102) comprising sub pixels, there being black matrix regions between the sub-pixels and interval regions between the sub-pixels, a liquid crystal layer (103) between the TFT array glass substrate (101) and the color filter plate (102), an upper polarizer plate (104) on a surface, which is not adjacent to the liquid crystal layer (103), of the color filter plate (102), a lower polarizer plate (105) on a surface, which is not adjacent to the liquid crystal layer (103), of the TFT array glass substrate (101), a support array (1031) including a plurality of supports positioned under the black matrix regions and interval regions between sub-pixels of the color filter plate, a plurality of transparent electrodes (1032), wherein liquid crystals are filled between the support array (1031) and the transparent electrodes (1032), and a control chip electrically connected with the transparent electrodes, wherein;
the plurality of supports (1031) are positioned on a surface of the TFT array glass substrate (101) of the liquid crystal display, and the transparent electrodes (1032) are positioned on a surface of the color filter plate (102), wherein each of the plurality of supports corresponds in position to and has a certain distance from a corresponding transparent electrode of the plurality of transparent electrodes; and wherein,
the control chip is configured to apply a respective potential to every transparent electrode during a blanking interval and calculate capacitance values based on a change of voltage values present at individual capacitors constituted by the plurality of supports (1031) and the plurality of transparent electrodes (1032) in the presence of a touch event by a user.

2. The liquid crystal display screen (100) of any preceding claim, wherein the plurality of transparent electrodes are arranged in parallel in a first direction and/or a second direction, the second direction being perpendicular to the first.

3. The liquid crystal display screen (100) of claim 2, wherein there exists a predetermined distance between every two consecutive transparent electrodes arranged in parallel in the first direction.

4. The liquid crystal display screen (100) of claim 2 or 3, wherein there exists a predetermined distance between every two consecutive transparent electrodes arranged in parallel in the second direction.

5. The liquid crystal display screen (100) of any preceding claim, wherein the liquid crystal display screen (100) further comprises a backlight (107); and the backlight (107) is positioned on a surface, which is not adjacent to the TFT array glass substrate (101), of the lower polarizer plate (105).

6. A mobile terminal **characterized in** comprising a processor (701) and a liquid crystal display screen (702) according to any preceding claim, wherein:
the processor (701) is configured to detect a capacitance value between the plurality of supports and the transparent electrodes, and determine a pressure value applied on the liquid crystal display screen by an operator based on the detected capacitance value.

## Patentansprüche

1. Flüssigkristallanzeigebildschirm (100), umfassend einen Dünnschichttransistor- (Thin Film Transistor, TFT) -Anordnungsglasträger (101), eine Farbfilterplatte (102), die Subpixel aufweist, wobei es schwarze Matrixregionen zwischen den Subpixeln und Intervallregionen zwischen den Subpixeln gibt, eine Flüssigkristallschicht (103) zwischen dem TFT-Anordnungsglasträger (101) und der Farbfilterplatte (102), eine obere Polarisatorplatte (104) auf einer Oberfläche der Farbfilterplatte (102), die nicht an die Flüssigkristallschicht (103) angrenzt, eine untere Polarisatorplatte (105) auf einer Oberfläche des TFT-Anordnungsglasträgers (101), die nicht an die Flüssigkristallschicht (103) angrenzt, eine Stützanordnung (1031), die mehrere unter den schwarzen Matrixregionen und Intervallregionen zwischen Subpixeln der Farbfilterplatte aufweist, mehrere transparente Elektroden (1032), wobei Flüssigkristalle zwischen der Stützanordnung (1031) und den transparenten Elektroden (1032) eingefüllt sind, und ein Steuerungschip, der elektrisch mit den transparenten Elektroden verbunden ist, wobei:
die mehreren Stützen (1031) auf einer Oberfläche des TFT-Anordnungsglasträgers (101) der Flüssigkristallanzeige positioniert sind und die transparenten Elektroden (1032) auf einer Oberfläche der Farbfilterplatte (102) positioniert sind, wobei jede der mehreren Stützen jeweils einer bzw. von einer entsprechenden transparenten Elektrode der mehreren transparenten Elektroden positionsmäßig entspricht und einen gewissen Abstand hat; und wobei
der Steuerungschip zum Anlegen eines jeweiligen Potenzials an jede transparente Elektrode während einer Austastlücke und zum Berechnen von Kapazitätswerten auf Basis einer Änderung von Spannungswerten konfiguriert ist, die in Anwesenheit eines Berührungsereignisses durch einen Benutzer an einzelnen Kondensatoren vorhanden sind, die von den mehreren Stützen (1031) und den mehreren transparenten Elektroden (1032) gebildet werden.

2. Flüssigkristallanzeigebildschirm (100) nach einem der vorhergehenden Ansprüche, wobei die mehreren transparenten Elektroden in einer ersten Richtung und/oder einer zweiten Richtung parallel angeordnet sind, wobei die zweite Richtung zur ersten lotrecht ist.

3. Flüssigkristallanzeigebildschirm (100) nach Anspruch 2, wobei zwischen jeweils zwei aufeinanderfolgenden transparenten Elektroden, die in der ersten Richtung parallel angeordnet sind, ein vorbestimmter Abstand besteht.

4. Flüssigkristallanzeigebildschirm (100) nach Anspruch 2 oder 3, wobei zwischen jeweils zwei aufeinanderfolgenden transparenten Elektroden, die in der zweiten Richtung parallel angeordnet sind, ein vorbestimmter Abstand besteht.

5. Flüssigkristallanzeigebildschirm (100) nach einem der vorhergehenden Ansprüche, wobei der Flüssigkristallanzeigebildschirm (100) ferner eine Hintergrundbeleuchtung (107) umfasst; und die Hintergrundbeleuchtung (107) auf einer Oberfläche der unteren Polarisatorplatte (105) positioniert ist, die nicht an den TFT-Anordnungsglasträger (101) angrenzt.

6. Mobil-Endgerät, **dadurch gekennzeichnet, dass** es einen Prozessor (701) und einen Flüssigkristallanzeigebildschirm (702) nach einem der vorhergehenden Ansprüche umfasst, wobei:
der Prozessor (701) zum Erkennen eines Kapazitätswerts zwischen den mehreren Stützen und den transparenten Elektroden und zum Bestimmen eines durch einen Bediener auf den Flüssigkristallanzeigebildschirm angewendeten Druckwerts auf Basis des erkannten Kapazitätswertes konfiguriert ist.

## Revendications

1. Ecran d'affichage à cristaux liquides (100), comprenant un substrat de verre à réseau de transistors à couches minces (TFT) (101), une plaque de filtre couleur (102) comprenant des sous-pixels, des régions matricielles noires étant positionnées entre des sous-pixels et des régions d'intervalle entre les sous-pixels, une couche de cristaux liquides (103) entre le substrat de verre à réseau TFT (101) et la plaque de filtre couleur (102), une plaque polarisante supérieure (104) sur une surface, qui n'est pas adjacente à la couche de cristaux liquides (103), de la plaque de filtre couleur (102), une plaque polarisante inférieure (105) sur une surface, laquelle n'est pas adjacente à la couche de cristaux liquides (103), du substrat de verre à réseau TFT (101), un réseau de supports (1031) comportant une pluralité de supports positionnés sous les régions matricielles noires et régions d'intervalles entre des sous-pixels de la plaque de filtre couleur, une pluralité d'électrodes transparentes (1032), dans lequel des cristaux liquides sont remplis entre le réseau de supports (1031) et les électrodes transparentes (1032), et une puce de commande connectée électriquement aux électrodes transparentes, dans lequel ;
la pluralité de supports (1031) est positionnée sur une surface du substrat de verre à réseau TFT (101) de l'afficheur à cristaux liquides, et les électrodes transparentes (1032) sont positionnées sur une surface de la plaque de filtre couleur (102), dans lequel chacun de la pluralité de supports correspond en position à une électrode transparente correspondante de la pluralité d'électrodes transparentes et présente une certaine distance par rapport à celle-ci ; et dans lequel,
la puce de commande est configurée pour appliquer un potentiel respectif à chaque électrode transparente durant un intervalle de suppression et calculer des valeurs de capacité en fonction d'un changement de valeurs de tension présentes au niveau de condensateurs individuels constitués par la pluralité de supports (1031) et la pluralité d'électrodes transparentes (1032) en présence d'un événement de toucher par un utilisateur.

2. Ecran d'affichage à cristaux liquides (100) selon n'importe quelle revendication précédente, dans lequel la pluralité d'électrodes transparentes est agencée parallèlement dans un premier sens et/ou un second sens, le second sens étant perpendiculaire au premier.

3. Ecran d'affichage à cristaux liquides (100) selon la revendication 2, dans lequel une distance prédéterminée existe entre chaque deux électrodes transparentes consécutives agencées en parallèle dans le premier sens.

4. Ecran d'affichage à cristaux liquides (100) selon la revendication 2 ou 3, dans lequel une distance prédéterminée existe entre chaque deux électrodes transparentes consécutives agencées en parallèle dans le second sens.

5. Ecran d'affichage à cristaux liquides (100) selon n'importe quelle revendication précédente, l'écran d'affichage à cristaux liquides (100) comprenant en outre un rétroéclairage (107) ; et le rétroéclairage (107) étant positionné sur une surface, laquelle n'est pas adjacente au substrat de verre à réseau TFT (101), de la plaque polarisante inférieure (105).

6. Terminal mobile **caractérisé en ce qu'**il comprend un processeur (701) et un écran d'affichage à cristaux liquides (702) selon n'importe quelle revendication précédente, dans lequel:
le processeur (701) est configuré pour détecter une valeur de capacité entre la pluralité de supports et les électrodes transparentes, et déterminer une valeur de pression appliquée sur l'écran d'affichage à cristaux liquides par un opérateur en fonction de la valeur de capacité détectée.
